# DEMANDE DE BREVET EUROPEEN

(11) **EP 0 947 286 A1**
(43) Date de publication de la demande: **06.10.1999**
(21) Numéro de dépôt: 99460017.9
(22) Date de dépôt: 03.03.1999
(51) Int. Cl.: B23Q 7/04, F15B 11/12

(54) **Dispositif pour effectuer des déplacements entre des pièces allongées et un outil selon des pas contrôlés et répétés**

(30) Priorité: 03.03.1998 FR 9802802
(71) Demandeur: Etablissement Roty et Fils (SARL), 35430 La Ville es Nonais (FR)
(72) Inventeur: Roty, Loic, 22490 Plouer sur Rance (FR)
(74) Mandataire: Ballot, Paul

(57) **Abrégé**

Un dispositif selon l'invention peut servir à déplacer automatiquement à pas contrôlés une pièce allongée (P) au poste de travail d'une machine (M).

Il comprend alors une butée (1) d'entraînement de pièce mobile dans la direction de déplacement, laquelle est connectée à un chariot (2) engagé sur une glissière (G) parallèle à la direction de déplacement et pourvu d'un frein (20), par l'intermédiaire d'un moyen (5) permettant de la déplacer en va-et-vient sur une course déterminée (1) par rapport au chariot (2), la butée (1) étant par ailleurs immobilisable indépendamment du chariot (2).

L'ensemble de la butée (1) et du chariot (2) fonctionne en se déplaçant pas à pas sur la glissière (G) à la façon d'un "marcheur".

## Description

La présente invention concerne des dispositifs servant à effectuer des déplacements entre des pièces allongées et un outil selon des pas de déplacement contrôlés et répétés. Elle concerne plus particulièrement des dispositifs destinés à être associés à une machines-outil pour déplacer longitudinalement des pièces allongées au poste de travail, s'agissant par exemple d'une tronçonneuse et de son utilisation pour couper des barres en tronçons de longueur déterminée.

En règle générale, les machines destinées à l'usinage ou la coupe de pièces allongées sont équipées d'une table d'amenée, laquelle comporte le plus souvent une voie à rouleaux. Sur cette voie, les pièces peuvent être déplacées manuellement, ou bien par des moyens d'entraînement tels qu'étau mobile ou butée. Dans le cas d'un étau mobile, celui-ci se déplace en va-et-vient à partir d'une position d'origine le long d'une course longitudinale déterminée, et coopère avec un étau fixe qui immobilise la pièce lorsqu'à la fin de chaque cycle de déplacement, il relâche la pièce pour retourner à sa position d'origine.

S'agissant d'une butée, celle-ci est montée sur un chariot se déplaçant sur une glissière couvrant toute la longueur de la voie d'amenée. Elle opère par contact contre l'extrémité arrière de la pièce à traiter, qu'elle retient généralement au moyen d'une pince. Elle est déplacée manuellement ou bien automatiquement le long de la voie. Bien entendu, toute la sophistication peut être apportée au contrôle et à la commande des déplacements de la butée, mais elle a aussi l'avantage d'exister sous forme de matériels simples bien que fiables et commodes et donc peu coûteux. Pour plus de précisions, on pourra se référer au brevet français n° 2 642 692 ayant le même titulaire que la présente demande, et intitulé "Dispositif de butée de positionnement", dont l'enseignement est incorporé ici par référence.

C'est en vue de pouvoir rentrer dans cette gamme de matériels simples et bon marché que l'invention a été conçue, qui consiste en des dispositifs servant à déplacer automatiquement des pièces selon des pas contrôlés successifs. Néanmoins, et comme on le verra dans la suite, ces dispositifs ont toutes les qualités et avantages pour être intégrés aussi dans des matériels plus conséquents.

Dans sa forme générale, l'invention consiste en un dispositif servant à effectuer des déplacements entre des pièces allongées et un outil selon des pas contrôlés et répétés, caractérisé en ce qu'il comprend un support d'entraînement de pièce ou bien porteur dudit outil connecté à un chariot principal, lequel chariot principal est apte à se déplacer et à s'immobiliser sur une voie orientée selon une direction de déplacement, en ce que ledit support est déplaçable en va-et-vient par rapport audit chariot principal et dans la direction de déplacement, sur une course correspondant à un pas, et en ce que ledit support est immobilisable indépendamment du chariot principal, un cycle de fonctionnement pour avancer ledit support dudit pas à partir d'une position d'immobilisation du chariot principal sur ladite voie et d'une position de retrait sur le chariot principal dudit support comprenant successivement : a) l'avance jusqu'en fin de course dudit support depuis le chariot principal immobilisé, b) l'immobilisation dudit support, c) l'avance du chariot principal vers ledit support immobilisé, sur la totalité de la course de retour dudit support et d) l'immobilisation du chariot principal sur ladite voie.

Pour l'application du dispositif selon l'invention au déplacement à pas contrôlés de pièces allongées au poste de travail d'une machine, ledit support peut être une butée d'entraînement desdites pièces, et la voie sur laquelle est engagé ledit chariot principal est fixe par rapport audit poste de travail. En pratique, cette voie est une glissière faisant avantageusement partie intégrante d'une table d'amenée de pièces.

Il apparaît donc que le dispositif fonctionne à la façon d'un "marcheur", mû par le seul moyen d'entraînement en va-et-vient du support ou butée par rapport au chariot, lequel est avantageusement un vérin à double effet pneumatique, hydraulique ou électrique, dont la course peut être réglée de façon très précise, par exemple au moyen d'un système à vis. On notera que le dispositif peut "marcher" avec une même efficacité dans le sens avant et dans le sens arrière, et accomplir toutes les combinaisons de pas avant et pas arrière possibles sur la longueur de ladite voie. S'agissant d'une butée, celle-ci devra alors bien entendu être pourvue d'une pince de serrage de pièce.

La même liaison qu'entre le support ou butée et le chariot principal peut être reproduite entre celui-ci et un chariot arrière, qui procure une longueur de pas supplémentaire et permet donc de multiplier les longueurs d'avance et de recul contrôlées par combinaison de ces deux pas avec additions et/ou soustractions. Naturellement, un autre chariot connecté de la même façon derrière le chariot arrière procurerait encore un pas supplémentaire en multipliant les possibilités de combinaison, et ainsi de suite.

Ledit support peut être porté directement sur le chariot principal, auquel cas, s'agissant d'une butée, elle comporte une pince de serrage de pièce, et elle est immobilisée, lorsque le chariot principal se déplace, par l'intermédiaire de la pièce à traiter elle-même dont elle est solidaire par sa pince, au moyen d'un étau immobilisant la pièce, lequel peut se trouver à l'extrémité aval du dispositif d'amenée de pièce, près de la machine, ou sur la machine elle-même.

En variante, le support ou butée est monté fixe sur un chariot porteur se déplaçant devant le chariot principal, et pourvu comme lui d'un frein d'immobilisation. De préférence, dans les deux cas, le support ou butée comprend un support de liaison qui permet de régler longitudinalement son positionnement par rapport au chariot principal. Avantageusement, ce support de liaison a une certaine souplesse, pour autoriser à la butée un léger flottement transversal afin de lui permettre d'absorber en cours de déplacement les légères variations d'alignement résultant de ce que les pièces à traiter ne sont pas toujours parfaitement rectilignes.

Les caractéristiques et avantages de l'invention mentionnées ci-dessus, ainsi que d'autres, apparaîtront clairement à la lecture de la description suivante, faite en relation avec les dessins joints, dans lesquels :
la Fig. 1 est une vue schématique de côté illustrant, associé à une machine-outil, un matériel d'amenée d'un type auquel l'invention est plus particulièrement destinée ;
les Figs. 2a à 2c sont des vues semblables schématiques illustrant un dispositif selon l'invention en trois étapes d'un cycle de fonctionnement ; et
les Figs. 3a à 3b sont des vues homologues des Figs. 2a à 2c concernant une variante de dispositif selon l'invention.

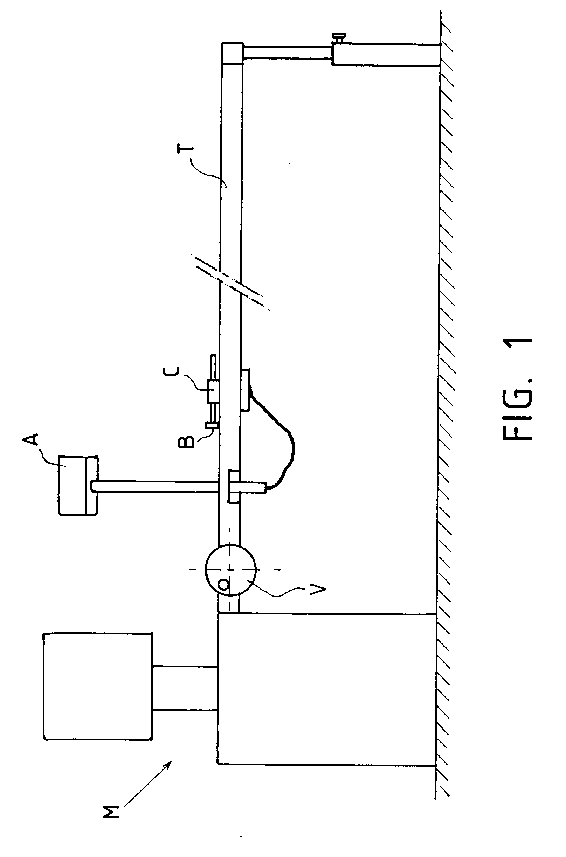

Le dispositif de butée de positionnement représenté à la Fig. 1 au côté d'une machine-outil M est du type décrit dans le brevet FR-A-2 642 692 précité auquel on pourra se référer. Pour rappel, il comprend essentiellement un bâti longitudinal sur lequel est montée une table d'amenée de pièces T, s'agissant généralement d'une piste à rouleaux. A cette piste à rouleaux, est associée une glissière sur laquelle est engagé un chariot C portant une butée B. Le chariot est déplaçable manuellement au moyen d'un volant d'entraînement V placé à proximité de la machine M, ou bien il est entraîné par un moteur. Un boîtier d'affichage A indique la position du chariot C le long de la table T.

C'est plus particulièrement pour des matériels de ce type qu'ont été conçus les dispositifs selon l'invention, qui permettent de façon simple et fiable, et avec précision, d'avancer et/ou reculer automatiquement à pas contrôlés des pièces au poste de travail d'une machine, par exemple une perceuse ou une tronçonneuse. Comme on le verra, de par leur principe même, les dispositifs de l'invention ont en outre l'avantage d'être très facilement adaptables sur des matériels existants.

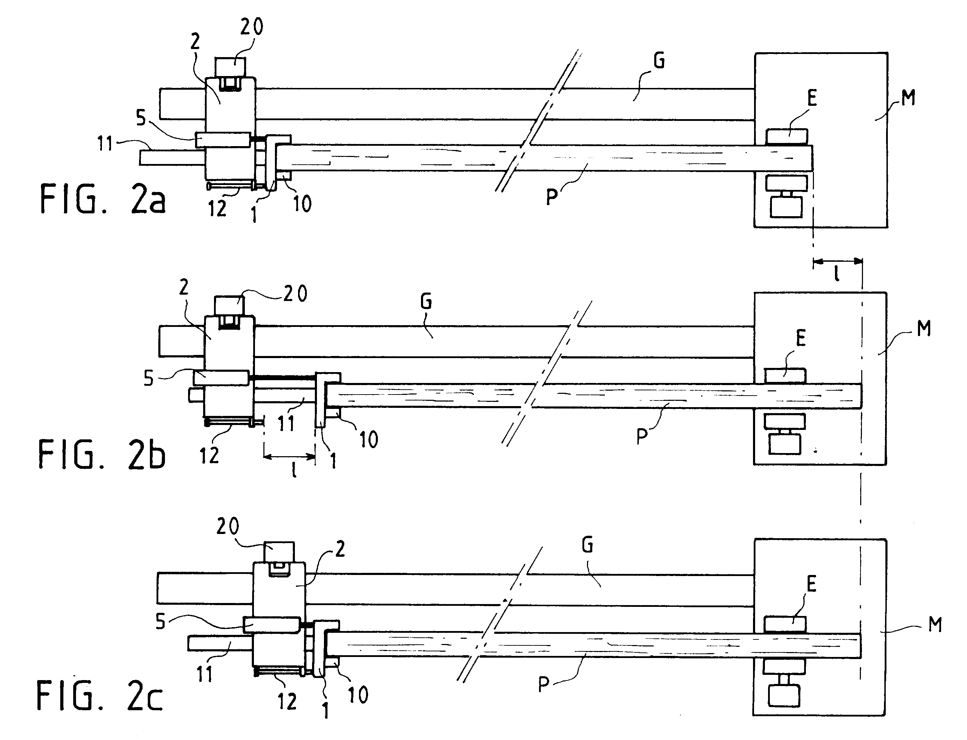

Les Figs. 2a à 2c illustrent schématiquement les éléments essentiels et le fonctionnement d'une première forme de réalisation de l'invention que l'on peut considérer comme étant une version de base. Elle comprend, solidaire d'une table d'amenée de pièce non représentée, une glissière longitudinale G, l'ensemble de la table et de la glissière étant associé comme il convient à une machine M.

Sur la glissière G, est engagé un chariot 2 qui, dans le cadre général de l'invention sera appelé chariot principal. Le chariot 2 est libre sur la glissière G, seulement pourvu d'un frein 20 pouvant assurer son immobilisation. Selon l'invention, le chariot 2 porte au-dessus de la tablé d'amenée de pièce une butée 1 qui est déplaçable par rapport à lui en va-et-vient longitudinal sur une course de longueur déterminée. A cet effet, telle que représentée dans les dessins, la butée 1 est montée en bout d'un support 11 coulissant dans le corps du chariot 2, et reliée d'autre part à celui-ci par un vérin à double effet 5. La longueur 1 de la course de va-et-vient de la butée est réglable, par exemple comme montré au moyen d'une vis 12 au contact de laquelle vient le dos de la butée 1 lors de la rétraction du vérin 5. D'autre part, la butée 1 est pourvue d'une pince 10 de retenue de pièce.

Le dispositif nécessite en outre pour fonctionner un étau E susceptible d'immobiliser la pièce P à traiter, dont l'extrémité arrière est d'autre part tenue fermement dans la pince 10 de la butée 1. Dans la forme de réalisation montrée dans les dessins, l'étau E fait partie de la machine, mais en variante, il peut s'agir d'un étau fixe disposé dans la partie d'extrémité aval de la glissière G et de la table d'amenée. En pratique, ce peut être alors un étau porté lui-même sur un chariot engagé et immobilisé sur la glissière G.

Le fonctionnement du dispositif est le suivant : en premier lieu, le réglage de la longueur 1 du pas de déplacement désiré est réglé au moyen de la vis 12, puis la pièce P à traiter est placée sur la table d'amenée, son extrémité arrière étant engagée dans la butée 1 et serrée dans la pince 10 de celle-ci. La butée 1 étant en position reculée sur le chariot 2, celui-ci est déplacé sur la glissière G pour être mis en position de départ, puis immobilisé, l'étau E étant bien entendu ouvert, Fig. 2a.

Ensuite, la butée 1 effectue un pas en avant de longueur 1 avec la pièce P, entraînée par le vérin 5 qui se déploie totalement, Fig. 2b. La pièce P ayant avancé d'un pas dans l'étau E, elle est serrée dans celui-ci pour être immobilisée, ce qui a pour effet d'immobiliser également la butée 1, bloquée sur l'extrémité de la pièce P par sa pince 10. Alors, en libérant le frein 20 du chariot 2, et en commandant la rétraction du vérin 5, on fait avancer le chariot 2 d'un pas, jusqu'à ce que la vis 12 de fin de course de rétraction du vérin 5 vienne à nouveau au contact de la butée 1, Fig. 2c. Après immobilisation du chariot 2 et desserrage de l'étau E, un nouveau cycle peut commencer. A noter qu'il suffit de changer l'ordre des immobilisations de la butée 1 et du chariot 2 par rapport aux mouvements de rétraction et de déploiement du vérin 5 pour effectuer des pas de recul ou lieu de pas d'avance.

En faisant le rapprochement entre les Figs. 1 et 2, il apparaît clairement que l'ensemble du chariot 2 et de la butée 1 peut être monté très simplement en remplacement de l'ensemble B, C dans le dispositif de la Fig. 1, aussi bien sur un matériel neuf qu'un matériel déjà en service. L'ensemble 1, 2 peut alors être utilisé également en tant que butée classique, par couplage du chariot 2 avec le moyen d'entraînement prévu à cet effet, par exemple le volant V, la butée 1 étant alors immobilisée sur le chariot 2. Pour passer au mode de déplacement automatique pas à pas, il suffit de désaccoupler le chariot 2 d'avec son moyen d'entraînement le long de la table, et de rétablir l'aptitude de la butée 1 à être déplaçable en translation longitudinale par rapport au chariot 2 au moyen du vérin 5.

Dans la forme de réalisation illustrée aux Figs. 3a à 3c, se retrouvent des mêmes éléments qu'aux Figs. 2a à 2c, auxquels on a de ce fait attribué les mêmes références. Ce sont, montés sur une même glissière G : une butée 1 avec sa pince 10 ; un chariot principal 2 avec son frein d'immobilisation 20 ; un vérin 5 assurant des déplacements d'un pas entre la butée 1 et la chariot 2 ; et une vis de réglage 12 de la longueur l du pas.

Il est prévu en outre un chariot supplémentaire 3, également engagé sur la glissière G, en aval du chariot 2, et pourvu d'un frein d'immobilisation 30. Le vérin 5 et la vis de réglage 12 sont montées entre le chariot 2 et le chariot 3. Ce dernier porte la butée 1 qui est fixe en fonctionnement par rapport à lui. Comme montré dans les dessins, la butée 1 comprend avantageusement un support de liaison 11' permettant de régler sa position longitudinale par rapport au chariot 3, et donc par rapport au chariot principal 2, et qui l'autorise de préférence, par exemple par élasticité, à être légèrement flottante transversalement. Il va de soi qu'un support intermédiaire similaire de réglage longitudinal de la butée peut être prévu dans un dispositif du type représenté aux Figs. 2a à 2c.

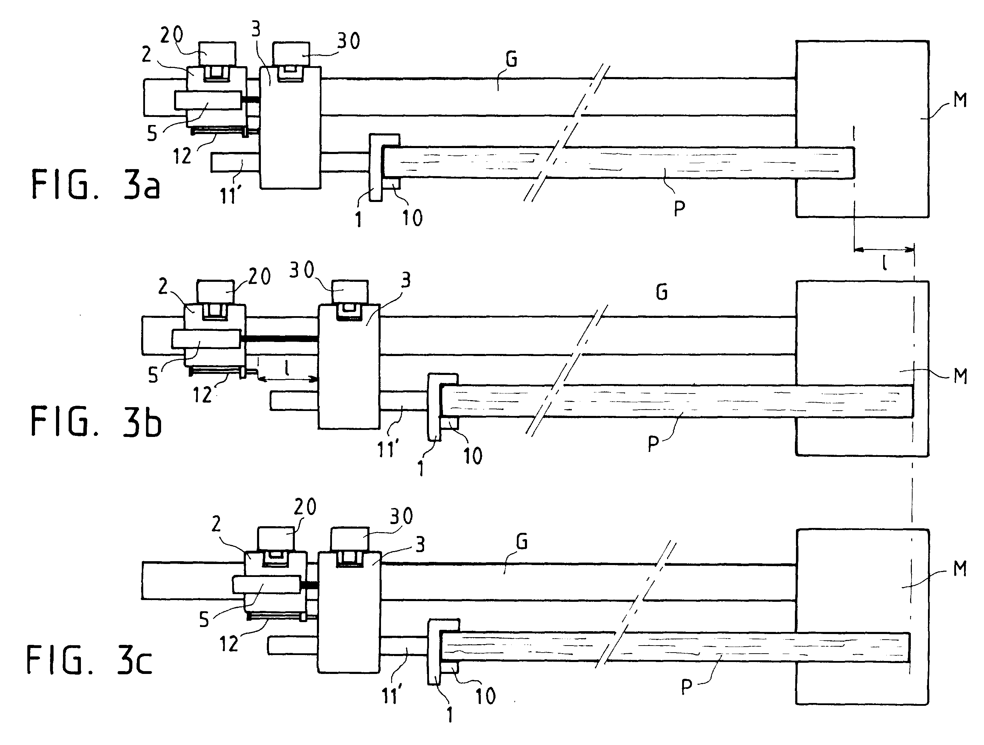

Dans un cycle de fonctionnement d'avance, après que le positionnement longitudinal de la butée 1 sur le chariot 3 et la longueur du pas l ont été réglés, qu'une pièce p a été engagée dans la butée 1, et que les chariots 2 et 3, en butée l'un sur l'autre par l'intermédiaire de la vis 12, ont été amenés en position de départ sur la glissière G, le chariot 2 est immobilisé au moyen de son frein 20, Fig. 3a. Puis le vérin 5 se déploie, en faisant avancer ensemble d'un pas le chariot 3, la butée 1 et la pièce P, Fig. 3b. C'est alors au tour du chariot 3 d'être immobilisé au moyen de son frein 30, pour que libéré, le chariot 2 puisse être avancé lui aussi d'un pas par rétraction du vérin 5, Fig. 3c. Un nouveau cycle d'avance pourra alors commencer, après que le chariot 2 aura été à nouveau immobilisé et le chariot 3 libéré. De même et aussi simplement que celui des Figs. 2a à 2c, ce dispositif est capable de combiner des pas d'avance et de recul.

Ce dispositif présente également les mêmes avantages de simplicité de montage et d'adaptabilité que celui décrit précédemment sur un matériel du type représenté à la Fig. 1. Pour utiliser le dispositif en butée classique, il suffit d'accoupler l'un des deux chariots 2, 3 au moyen d'entraînement prévu à cet effet, les chariots 2 et 3 et la butée 1 étant par ailleurs immobilisés entre eux.

L'un et l'autre des dispositifs des Figs. 2a à 2c et 3a à 3c peuvent être développés pour permettre de combiner entre eux plusieurs pas de longueurs différentes. Les pas supplémentaires seront obtenus au moyen d'autant de chariots engagés les uns à la suite des autres sur la glissière G derrière le chariot principal, chacun pourvu d'un frein, connectés entre chariots adjacents, y compris le chariot principal 4, par des ensembles de liaison regroupant chacun un vérin à double effet homologue du vérin 5 et une vis de réglage de la longueur de pas homologue de la vis 12. Dans tous les cas, la commande des différents mouvements pourra être effectuée au moyen d'un atomate de conception simple. A noter la possibilité, particulièrement avantageuse en cas de temps d'usinage court, que plusieurs déplacements relatifs entre éléments du dispositif, en d'autres termes plusieurs mouvements des différents vérins 5, aient lieu dans le même temps, la condition nécessaire à chaque étape de déplacement étant que l'un des éléments soit immobilisé.

L'invention peut trouver à s'appliquer également pour opérer sur des pièces lourdes ou fixes (poutres de charpente par exemple), où il est nécessaire ou tout au moins plus commode que ce soit l'outil qui se déplace ; et pour opérer sur des profilés courbes en totalité ou en partie. Dans ce cas, la butée précédemment décrite est remplacée par un support destiné à porter un outil, tandis que le ou les chariots sont engagés sur une glissière faisant partie intégrante de la pièce à traiter ou bridée sur elle.

## Revendications

1. Dispositif servant à effectuer des déplacements entre des pièces allongées et un outil selon des pas contrôlés et répétés dans une direction longitudinale, caractérisé en ce qu'il comprend un support (1) connecté à un chariot principal (2), lequel chariot principal (2) est apte à se déplacer et à s'immobiliser sur une voie (G) orientée selon la direction de déplacement, en ce que le support (1) est déplaçable en va-et-vient par rapport audit chariot principal (2) et dans la direction de déplacement, sur une course (1) correspondant à un pas, et en ce que le support (1) est immobilisable indépendamment du chariot principal (2), un cycle de fonctionnement pour avancer le support (1) dudit pas à partir d'une position d'immobilisation du chariot principal (2) sur ladite voie (G) et d'une position de retrait sur le chariot principal (2) du support (1) comprenant successivement : a) l'avance jusqu'en fin de course du support (1) depuis le chariot principal (2) immobilisé, b) l'immobilisation du support (1), c) l'avance du chariot principal (2) vers le support (1) immobilisé sur la totalité de la course de retour du support (1), et d) l'immobilisation du chariot principal (2) sur ladite voie (G).

2. Dispositif selon la revendication 1, caractérisé en ce que le moyen assurant les déplacements en va-et-vient entre le support (1) et le chariot principal (2) est un vérin à double effet (5).

3. Dispositif selon la revendication 2, caractérisé en ce qu'il est prévu un moyen (12) de réglage de la course de déploiement et de rétraction du vérin (5).

4. Dispositif selon la revendication 3, caractérisé en ce qu'il est prévu, derrière le chariot principal (2), un ou plusieurs chariots supplémentaires engagés sur ladite voie (G) et pourvus de freins, connectés entre chariots adjacents par un ensemble comprenant un vérin à double effet homologue du vérin (5) et un moyen de réglage de la course de déploiement et de rétraction de ce vérin homologue du moyen (12), pour permettre de combiner entre eux plusieurs pas de longueurs différentes.

5. Dispositif selon l'une des revendications 1 à 4, caractérisé en ce que ledit support (1) est porté par l'intermédiaire d'un support de liaison (11') permettant de régler sa position longitudinale par rapport au chariot principal (2).

6. Dispositif selon l'une des revendications 1 à 5, servant au déplacement à pas contrôlés de pièces allongées (P) au poste de travail d'une machine (M), caractérisé en ce que ledit support (1) est une butée d'entraînement desdites pièces (P), la voie (G) étant fixe par rapport audit poste de travail de la machine (M).

7. Dispositif selon la revendication 6, caractérisé en ce que la butée (1) est pourvue d'une pince de préhension de pièce (10).

8. Dispositif selon la revendication 7, caractérisé en ce que la butée (1) est portée directement sur le chariot principal (2), l'immobilisation de la butée (1), lorsque le chariot (2) principal se déplace, étant réalisée par l'intermédiaire de la pièce à traiter (P) elle-même dont l'extrémité est retenue dans sa pince (10), par un étau (E) immobilisant la pièce (P).

9. Dispositif selon la revendication 8, caractérisé en ce que ledit étau (E) est disposé à l'extrémité aval de la table d'amenée des pièces (P).

10. Dispositif selon la revendication 8, caractérisé en ce que l'étau (E) fait partie de la machine (M).

11. Dispositif selon l'une des revendications 1 à 9, caractérisé en ce que le support ou butée (1) est monté sur un chariot (3) engagé sur la voie (G) à l'avant du chariot principal (2), et pourvu d'un frein d'immobilisation (30), le support ou butée (1) étant fixe en fonctionnement sur le chariot (3) qui assure son immobilisation lors des déplacements du chariot principal (2).

12. Dispositif selon la revendication 11, caractérisé en ce que le moyen assurant les déplacements en va-et-vient entre le support ou butée (1) et le chariot principal (2) est monté entre celui-ci et le chariot (3).
